(19) Europäisches Patentamt
European Patent Office
Office européen des brevets

(11) EP 1 992 437 A1

(12) # EUROPEAN PATENT APPLICATION
published in accordance with Art. 158(3) EPC

(43) Date of publication:
**19.11.2008 Bulletin 2008/47**

(21) Application number: **07715142.1**

(22) Date of filing: **23.02.2007**

(51) Int Cl.:
***B23B 51/00*** *(2006.01)*

(86) International application number:
**PCT/JP2007/053992**

(87) International publication number:
**WO 2007/097474 (30.08.2007 Gazette 2007/35)**

(84) Designated Contracting States:
**DE IT**

(30) Priority: **23.02.2006 JP 2006046694**

(71) Applicant: **National University Corporation Tokyo University of Agriculture and Technology**
**Fuchu-shi, Tokyo 183-8538 (JP)**

(72) Inventors:
- **NISHIWAKI, Nobuhiko**
  **Fuchu-shi, Tokyo 183-8538 (JP)**
- **HORI, Sankei**
  **Fuchu-shi, Tokyo 183-8538 (JP)**

(74) Representative: **Hassa, Oliver Michael**
**Reinhard-Skuhra-Weise & Partner**
**Patentanwälte**
**Friedrichstrasse 31**
**80801 München (DE)**

(54) **NONAXISYMMETRICAL BLADE DRILL**

(57) The present invention provides a drill for making a dilled hole having a high circularity. The axial asymmetric edge drill has a chisel portion formed in the tip center so that the chisel portion center matches with the drill shaft center. At least one of the cutting edges is in an axial asymmetric position with another cutting edge across the drill shaft center. The outline of the edges of the drill forms a circular arc.

Fig. 2

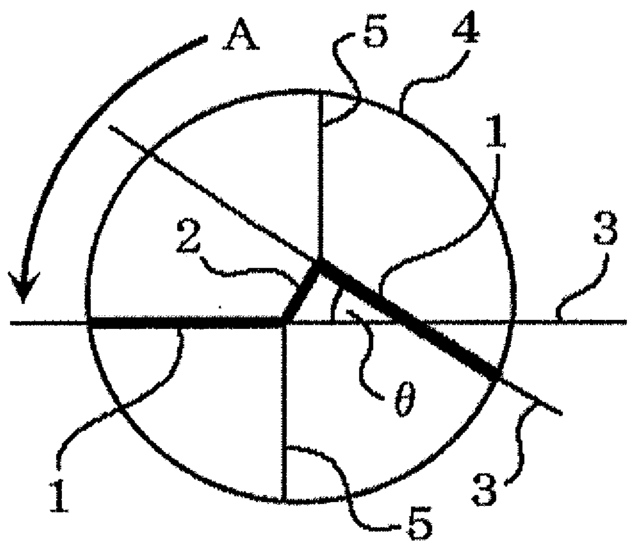


EP 1 992 437 A1

## Description

Technical Field

The present invention relates to a shape of drill edge for obtaining a drilled hole with a high circularity.

Background Art

Drilling process is a hole making method widely used for directly making a hole in a solid object like a metal object without making a pilot hole.

A popular twist drill with two cutting edges has a chisel portion and cutting edges at the tip portion and a spiral flute on the body for excreting chips.

The chisel portion is the ridge line on the center of the drill tip. The cutting edges are the intervening portion between the flank face and the tooth face that are the inner faces of the spiral flute. In general, the bigger the drill diameter, the bigger the chisel portion.

Fig. 1 shows the end face where two cutting edges are positioned in a conventional twist drill. In Fig. 1, two cutting edges 1 are positioned at 0° angle across the chisel portion 2 at the center of the drill tip portion.

That is to say, the two cutting edges are axis symmetrically positioned across the revolution axis of the drill as the center axis.

When the number of the cutting edges is three or more, the angle $\theta$ between the extended line of the line connecting both ends of one cutting edge and the extended line of the line connecting both ends of another cutting edge is set to 360° /N. "N" represents the number of the cutting edges.

The typical drill tip angle is 118° . If the object material is soft, the drill tip angle is set to an angle smaller than 118° and if the object material is hard or brittle, the drill tip angle is set to an angle larger than 118° .

In a drilling process by the conventional drill with two cutting edges, a fluctuation of the drill itself or a fluctuation of mounting causes unbalanced movement of the right and left cutting edges, and the chisel portion at the drill tip portion may slip when the drill contacts the object and the revolution center will shift. It is called "Walking Phenomenon" and a circle with an odd-gon-shape distortion, e.g. a triangular, pentagon or heptagon shape distortion is obtained.

It is considered that this "Walking Phenomenon" in a drill is occurred because the stresses or deflections on two drill cutting edges are not equal (See, "Drill Walking Phenomenon" by Shosuke Tsueda, Yoshio Hasegawa and Hiroshi Kimura, Japan Society of Mechanical Engineers Collected Papers, 50-453, 1984).

As a method for improving the circularity of a drilled hole, a method for improving the bending elasticity by shortening the length between the drill tuck portion and the tip, and a burnishing drill, a drill reamer and a drill with a reamer for simultaneously drilling and finish processing by combining a reamer as a finishing tool with a drill are proposed (See Japanese Laid-Open Patent Application Nos. Toku-Kai-Hei 5-301109, Toku-kai-Hei 8-155715, Toku-Kai 2002-361509).

Japanese Laid-Open Patent Application Toku-Kai No. 2005-246577 discloses a twist drill with cutting edges positioned asymmetrically across the drill shaft center so that the drill shaft center and the center of the chisel portion are out of alignment for removing the burr in the surrounding part of the through hole drilled by the twist drill and thereby performing a drilling process of the hole and a removing process of the burr as a continuous process.

The twist drill disclosed in Japanese Laid-Open Patent Application No. Toku-Kai 2005-246577 forms a through hole by drilling a hole having the center that matches with the center of the chisel portion and then pulling out the drill with a drill revolution to form a hole with the center that matches with the drill shaft center thereby removing burr.

The twist drill disclosed in Japanese Laid-Open Patent Application Toku-Kai No. 2005-246577 has the problem that the formed through hole with a circularity lower than that for the hole formed by a conventional twist drill because two holes with different centers are made.

Japanese Laid-Open Patent Application Toku-Hyo-Hei No. 11-510103 discloses a twist drill with axial asymmetric cutting edges positioned across the drill shaft center by displacing the drill shaft center from the center of the chisel portion in order to reduce heat generation during drilling process.

The twist drill disclosed in Japanese Laid-Open Patent Application Toku-Hyo-Hei No. 11-510103 as well as the twist drill disclosed in Japanese Laid-Open Patent Application Toku-Kai No. 2005-246577 have no problem in case of drilling soft objects. However, since the center of the chisel portion and the drill shaft center are out of alignment in twist drill disclosed in Japanese Laid-Open Patent Application Toku-Hyo-Hei No. 11-510103, the center of the chisel portion works as the center of the drilled hole during a drilling process and then the drill revolves around the drill shaft center during pulling out process when the object material is hard.

Therefore the twist drill disclosed in Japanese Laid-Open Patent Application Toku-Hyo-Hei No. 11-510103 has the problem of forming a hole with the circularity lower than that for a hole formed by a conventional twist drill.

US Patent No. 4,913,603 discloses a twist drill for stabilizing the drill revolution by three revolution supports in order to form a drilled hole with a high circularity. The twist drill has cutting edges in an axial asymmetric position across the drill shaft center and has notches in the drill body.

The inventors of the twist drill disclosed in US Patent No. 4,913,603 found that it is necessary to have the cutting edges in an axial asymmetric position and the revolution supports in order to improve the circularity of drilled holes. However the notches in the drill body cause a problem with drill revolution because the notches are easily clogged with drill chips.

Disclosure of Invention

Although the "Walking Phenomenon" is prevented by reducing the length of the drill, a deep hole cannot be formed by this method. A finishing process using a reamer increases the process time because the process steps increase. Even if a reamer process is used, a high circularity cannot necessarily obtained because it was found that a distorted circle is created during a reamer process by the same reason as the case of drilling process.

It is also considered that a high circularity cannot be necessarily obtained by a drill reamer. Even if more cutting edges are added, the polygonal shape by the "Walking Phenomenon" will appear when the cutting edges are regularly positioned in the circumferential direction.

Therefore it is desired to provide a drill with a shape of cutting edges for a high circularity in a drilling process.

The inventors of the present invention considered that the "Walking Phenomenon" with a drill is caused by the symmetric arrangement of the drill cutting edges on a single circle. The vibrations generated by unbalanced forces impinging on the drill tip synchronize each other to form an odd-gon-shaped distorted circle by a regular so called "Walking Phenomenon". The present invention is based on the finding that the "Walking Phenomenon" is prevented, the circularity of the drilled circle is improved and a distortion of the circle is prevented by positioning the cutting edges asymmetrically in order to avoid synchronization of the vibrations generated by the unbalanced forces impinging on the drill tip.

The present invention has the configuration explained below.

(1) An axial asymmetric edge drill having a plurality of cutting edges revolving across the drill shaft center for drilling an object by wherein,
the chisel portion of the drill is formed at the center of the tip portion of the drill so that the center of the chisel portion matches with the drill shaft center,
at least one of the cutting edges is in an axial asymmetric position with another cutting edge across the drill shaft center, and
the outline of the edges of the drill forms a circular arc.

(2) An axial asymmetric edge drill according to (1) wherein,
the drill has two cutting edges, and
the angle between the extended line of the line connecting both ends of one cutting edge and the extended line of the line connecting both ends of another cutting edge is in the range from 5° to 175° at the end face where the cutting edges of the drill are positioned.

(3) An axial asymmetric edge drill according to (1) wherein,
the drill has three or more cutting edges, and
the angle θ between the extended line of the line connecting both ends of one cutting edge and the extended line of the line connecting both ends of at least one another cutting edge is in the range of Equation [1] or [2] at the end face where the cutting edges of the drill are positioned.

$$0^\circ < \theta \leqq \{(360/N) - 5\}^\circ \qquad [1]$$

$$\{(360/N) + 5\}^\circ \leqq \theta < 180^\circ \qquad [2]$$

N represents the number of the cutting edges in Equations [1] and [2].

(4) An axial asymmetric edge drill according to either one of (1) through (3) wherein,
the tip of the cutting edge is curved.

(5) An axial asymmetric edge drill having a plurality of cutting edges revolving across the drill shaft center for drilling an object by wherein,
the chisel portion of the drill is formed at the center of the tip portion of the drill so that the center of the chisel portion matches with the drill shaft center, and
at least one of the cutting edges is convex V-shaped.

(6) An axial asymmetric edge drill according to (5) wherein,
the angle between the cutting edges forming the convex V-shape is 140° .

The drilling process for obtaining a drilled circle with a high circularity can be realized by the drill only. The process time is reduced because no finishing process by a reamer is necessary and an unnecessarily large hole does not need to be drilled to obtain a high circularity.

Best Mode for Carrying Out the Invention

Although the popular drill is a twist drill having a cutting edge shape of right edge -right hand spiral flute, the present invention can be applied to any type of drill as long as the drill has a chisel portion and cutting edges like a reamer drill.

The present invention is not limited to a particular length or size of the chisel portion and various lengths and sizes are available depending on the drill diameter and the purpose of usage. However it is necessary to have the center of the chisel portion match with the drill shaft center so that the center of the drill revolution does not change during both the drilling process and the pulling out process.

The present invention is especially useful when the object to be drilled is made of a hard material like an inorganic material, e.g. a metal, a ceramic. It is because that drilling proceeds around not the drill shaft center but the center of the chisel portion in case of a hard material.

The present invention is not limited to the number of the cutting edges as long as it is two or more. When the number of the cutting edges is two, it is necessary at the end face where the drill cutting edges are positioned that the angle θ between the extended line of the line connecting both ends of a cutting edge and the extended line of the line connecting both ends of another cutting edge is set to 5° - 175° . It is desirable to set the angle θ to 15° - 170° in view of the circularity of a drilled hole.

When the number of the cutting edges is three or more, it is necessary at the end face where the drill cutting edges are positioned that the angle θ between the extended line of the line connecting both ends of a cutting edge and the extended line of the line connecting both ends of at least another one cutting edge is within the range shown in [1] or [2].

$$0^\circ < \theta \leqq \{(360/N) - 5\}^\circ \qquad [1]$$

"N" in Equation [1] represents the number of the cutting edges.

$$\{(360/N) + 5\}^\circ \leqq \theta < 180^\circ \qquad [2]$$

"N" in Equation [2] represents the number of the cutting edges.

Not all cutting edges need to satisfy Equation [1] or [2] in an axial asymmetric edge drill according to the present invention.

For example, in case of three cutting edges, for two of the three cutting edges the angle between the extended lines of the lines connecting both sides of the cutting edges can be 120° , and it is acceptable if the relationship of Equation [1] or [2] is satisfied between the remaining one cutting edge and one of the two cutting edges.

Fig. 2 shows a schematic view of the end face where the drill cutting edges are positioned in a drill according to the present invention.

Two cutting edges 1 are positioned in the drill outline 4. The two cutting edges 1 are positioned across the chisel portion 2 and the angle between the extended lines 3 of the lines connecting the both ends of the two cutting edges 1 is θ .

In Fig. 2, the reference numeral 5 represents the boundary between the spiral flute and the cutting edge portion, and "A" represents the direction of the drill revolution.

The shape of the cutting edge can be linear as shown in the schematic view of Fig, 2, a reentrant curved shape or convex curved shape as shown in Fig. 10.

The drilling process at a high revolution rate becomes stable by the convex curved shape cutting edges.

The excretion of chips becomes smooth because the drill chips are curled properly by the reentrant curved shape cutting edges as shown in Fig. 11.

The shape of the cutting edge can be a convex V-shape as shown in Fig. 13.

In Fig. 13, the convex V-shaped cutting edge 9 comprised a cutting edge portion D and a cutting edge portion E forming the convex V-shape. In case of two cutting edges 1 and 9, the cutting edge portion D forming a convex V-shape and the cutting edge 1 which does not have a convex V-shape can be positioned in parallel as shown in Fig. 13.

When the number of the cutting edges is three or more, the angle θ between the extended line of the line connecting both ends of the cutting edge portion D forming a convex V-shape and the extended line of the line connecting both ends of another cutting edge can be (360/N)° . "N" represents the number of the cutting edges.

In general, a drill has a spiral flute for excreting drill chips. In an axial asymmetric edge drill, the spiral flute can be either axial asymmetric in accordance with the arrangement of the cutting edges or axial symmetric.

An axial asymmetric edge drill according to the present invention can be manufactured by trimming the cutting edges of a conventional axial symmetric edge drill.

A popular drill is a twist drill having a cutting edge shape of right edge -right hand spiral flute, and the cutting edges at the tip portion are axis symmetrically formed as shown in Fig. 1.

The axial asymmetrical edge drill used in the embodiment explained below was manufactured by processing a drill for metal processing with axis symmetrically positioned cutting edges at its tip portion that is available in the market.

A drill according to the present invention is a drill with axial asymmetric cutting edges (if one cutting edge is rotated around the drill shaft center, it does not match with another cutting edge) as shown in Fig. 2 that shows the tip portion image.

A drill according to the present invention can be an axial asymmetric edge drill having two cutting edge portions as shown in Fig. 3(A) or an axial asymmetric edge drill having the cutting edge 1 made by making a slit in one cutting edge portion as shown in Fig. 3(B).

It is considered that the "Walking Phenomenon" occurs in a conventional drill because of the revolution center misalignment that is caused when two cutting edges cut the material by forming a distorted circle and moving from an apex to next apex of the distorted circle alternatively. As comparative examples, the following two drills with less revolution center misalignment were manufactured by processing the drills for metal processing that are available in the market.

(1) A single edged drill made by removing one edge for a d.rill process by a single thrust force only (Fig. 4)
(2) A short chisel drill with a shortened tip chisel portion (Fig. 5)

Fig. 4(A) shows a side view of the tip portion of a single edged drill, wherein the right side cutting edge exists while the left side cutting edge was removed. Fig. 4 (B) shows the end face of the single edged drill where the cutting edge is positioned.

Fig. 5(A) shows a side view of the short chisel drill. Fig. 5(B) shows the end face of the short chisel drill where the cutting edges are positioned.

A process for drilling an object was performed using a drill press. In order to observe the drilled circles formed on the object surface, the drill process stopped before a through hole is made and the shapes of the drilled circles were compared.

Embodiment

The drilled circles were obtained by changing the angle θ between the extended line of the line connecting both ends of one cutting edge and the extended line of the line connecting both ends of another cutting edge from 5° to 40° in an axial asymmetric cutting edge drill according to the present invention.

The cutting edge 1 shown in Fig. 3 (A) is made by removing one cutting edge from NACHI STANDARD twist drill with 10mm diameter (two linear cutting edges are positioned in parallel on the end face where the cutting edges are positioned) and making a slit in another remaining cutting edge.

The drill process was performed by changing the angle θ between the extended line 3 of the line connecting both ends of one cutting edge 1 and the extended line 3 of the line connecting both ends of another cutting edge 1 from 158° to 173° in this axial asymmetric cutting edge drill.

The drill process was performed using a NACHI STANDARD twist drill with 10mm diameter (two linear cutting edges are positioned in parallel on the end face where the cutting edges are positioned), the single edged drill shown in Fig. 4 and the short chisel drill shown in Fig. 5 as a comparative example.

An AAG/Aluminum alloy JIS A5052 H112 (called Aluminum alloy, hereinafter) and a JIS C2801 6/4 brass are used as the materials of the objects to be drilled that have different hardness. A drill press (NBD-340LR SENSITIVE BENCH DRILL by NAMIKI MACHINE) was used.

The drilling processes were performed using the apparatus shown in the schematic view of Fig. 6. The constant load of 29.4N was applied to the aluminum alloy object and the constant load of 49.0N was applied to the brass object for the process time of 25 seconds at the revolution rate of 500rpm to obtain equivalent drilled circles.

In the apparatus for a drill process shown in Fig. 6, a torque sensor 7 was positioned between an object 6 and a three-component dynamometer 8 and the drilling was performed in the direction B. The drill revolution direction is indicated by reference "C".

The circularity of each drilled circle formed by the drills mentioned above was measured respectively.

The circularity measurement was performed using a three-dimension measurement device (Xyanal 16D by Tokyo Seimitsu). The circularity was measured five times for respective drilled circle at the inlet position by touching the measuring probe at 10 points. An average circularity was obtained. In this embodiment, "circularity" is defined by the deference between the maximum radius and the minimum radius of a circle and represented in millimeters.

Fig.7 shows the measurement result for the circularity of the circle obtained by the drill process at a constant load. The horizontal axis represents the angle θ between the extended line of the line connecting both ends of one cutting edge and the extended line of the line connecting both ends of another cutting edge of a drill. The vertical axis represents the circularity.

The value of the circularity becomes smaller and the shape of the drilled circle becomes close to a perfect circle when the angle θ increases from θ =0° in both cases of an aluminum alloy object and a brass object. It is considered that the axial asymmetric cutting edges give an irregularity to the process thrust force.

When only the circularity is considered, the best circularity was obtained by the specially-processed single edged drill(α)and the worse circularity was obtained by the short chisel drill(β).

Such a process at a constant load is not used actually. In actual cases, the load is manually controlled or the process is performed by a NC fraise or a machining center at a constant feed.

The circularity was measured for the through holes drilled by a NC fries automatic process on the objects at a revolution of 500rpm and a feed of 30mm/min. Aluminum alloy objects of 10mm thickness and 1mm thickness and brass objects of 10mm thickness and 1mm thickness were prepared.

Fig. 8 shows the circularity measurement result for the aluminum alloy object of 10mm thickness and the brass object of 10mm thickness.

The horizontal axis represents the angle θ between the extended line of the line connecting both ends of one cutting edge and the extended line of the line connecting both ends of another cutting edge. The vertical axis represents the circularity. "α" represents the result for the single edged drill and "β" represents the result for the short chisel drill.

As shown in Fig. 8, the value of the circularity becomes smaller and the shape of the drilled circle becomes close to a perfect circle when the angle θ increases from θ =0° in both cases of the aluminum alloy object and the brass object. The value of the circularity is small and it is close to a perfect circle especially in case of θ ≧ 10° .

Fig. 9 shows the circularity measurement result for the aluminum alloy object of 1mm thickness and the brass object of 1mm thickness. The horizontal axis represents the angle θ between the extended line of the line connecting both ends of one cutting edge and the extended line of the line connecting both ends of another cutting edge. The vertical axis represents the circularity. "α" represents the result for the single edged drill and "β" represents the result for the short chisel drill.

As shown in Fig. 9, the value of the circularity becomes better in both cases of aluminum alloy and brass as the angle θ becomes larger in comparison with a normal drill as a reference. The value of the circularity is small and it is close to a perfect circle especially in case of θ ≧ 10° .

The value of the circularity became very large when the single edged drill is used for drilling the thin plate of 1mm thickness and the drilled hole was distorted. It is considered that the hole was distorted because a drilled part of the object was engaged with the edge removed portion of the drill was and cut at a constant feed because one cutting edge was completely removed in this type of drill.

The short chisel drill produced a hole with the circularity that is equivalent to that for a normal drill in case of drilling the aluminum alloy object and produced a hole with a circularity that is similar to the case of drilling the brass object.

The value of the circularity becomes small in case of a thin plate when θ ≧ 10° . In the range of θ =15° -40° , the value of the circularity became small, e.g. about 1/10 of that for a normal drill. It is also found that the single edged drill produced the distorted hole.

The axial asymmetric edge drill with convex curved cutting edges shown in Fig. 10 and the axial asymmetric edge drill with reentrant curved cutting edges shown in Fig. 11 were made by processing a NACHI STANDARD twist drill with 10mm diameter.

Figs. 14 and 15 show the circularity measurement result for the through hole made by an automatic process using a NC fries on a brass object of 1mm thickness at the programmed revolution of 500rpm and feed speed of 30mm/min.

Fig. 14 shows a result for the case of using an axial asymmetric edge drill of 0° ≦ θ ≦ 40° mentioned above.

Fig. 15 shows a result for the case of using an axial asymmetric edge drill of 158° ≦ θ ≦ 180° (a single edged drill was used for a drill of θ =180° ).

The drill having a convex V-shape cutting edge 9 shown in 13 was made by removing one cutting edge from a NACHI STANDARD twin drill with the diameter of 10mm. The angle $\theta_1$ between the cutting edge portion D and the cutting edge portion E of the convex V-shape cutting edge 9 was set to 138° .

The angle $\theta_2$ between the extended line 3 of the line connecting both ends of the cutting edge portion E of the convex V-shape cutting edge and the extended line 3 of the line connecting both ends of another cutting edge 1 was set to 42° . The angle $\theta_3$ between the extended line 3 of the line connecting both ends of the convex V-shape cutting edge 9 and the extended line 3 of the line connecting both ends of another cutting edge 1 was set to larger than 5° and smaller than 175° .

Fig. 16 shows a circularity measurement result for drilled holes in a 1mm thick brass plate by the convex V-shape edged drill and the short chisel drill.

In Fig. 16, the numerals on the horizontal axis represent the angle between the extended line of the line connecting both ends of one cutting edge and the extended line of the line connecting both ends of another cutting edge, and the vertical axis represents the circularity.

"42A" represents the result for the case of using an axial asymmetric edge drill with convex V-shape cutting edge wherein the angle $\theta_1$ between the cutting edge portion D and the cutting edge portion E is set to 138° .

It was found that the inlet shape of the drilled hole is close to a perfect circle when the angle θ between the axial asymmetric edges of a drill is in the range of 5° < θ ≦ 175° .

It is considered that the "Walking Phenomenon" can be improved by setting the angle θ between the extended line of the line connecting both ends of one cutting edge and the extended line of the line connecting both ends of another cutting edge to 40° < θ < 158° because the circularity of the drilled hole was improved by the axial asymmetric edge arrangement.

It is considered that a similar result can be obtained by either a linier cutting edge shape, a convex curved cutting edge shape or a reentrant curved cutting edge shape.

The number of the cutting edges is not limited to two. It is also considered that a similar result can be obtained by a drill having two or more cutting edges that includes at least one axial asymmetric cutting edge.

According to the present invention, the circularity is improved by misalignment of one of two cutting edge of a drill, e.g. a twist drill, a reamer drill.

Brief Description of Drawings

Fig. 1 shows the end face where cutting edges are positioned in a conventional twist drill.

Fig. 2 shows a schematic view of the end face where cutting edges are positioned in a axial asymmetric edge drill according to the present invention.

Fig.3 (A) shows a schematic view of the end face where cutting edges are positioned in a axial asymmetric edge drill according to the present invention and Fig.3(B) shows axial asymmetric edge drill having a slit in one cutting edge portion.

Fig.4 (A) shows a side view of a processed single edged drill as a comparative example and Fig. 4(B) shows a front view of the processed single edged drill as a comparative example.

Fig.5 (A) shows a side view of a processed chisel drill with a short chisel as a comparative example and Fig. 4(B) shows a front view of the processed chisel drill with a short chisel as a comparative example.

Fig.6 shows a schematic view of an experiment apparatus used for the present invention.

Fig.7 shows a measurement result of the circularity of the drilled holes by drills with varied angle θ .

Fig.8 shows a measurement result of the circularity of the drilled holes in a 10mm thick plate by a NC fraise using axial asymmetric drills with varied angle θ , a conventional twist drill and the comparative example drills.

Fig.9 shows a measurement result of the circularity of the drilled holes in a 1mm thick plate by a NC fraise using axial asymmetric drills with varied angle θ , a conventional twist drill and the comparative example drills.

Fig.10 shows an image of the end face shape of an axial asymmetric drill having convex curved cutting edges according to the present invention.

Fig.11 shows an image of the end face shape of an axial asymmetric drill having reentrant curved cutting edges according to the present invention.

Fig. 12 shows a side view of a axial asymmetric edge drill according to the present invention.

Fig.13 shows the end face shape of an axial asymmetric drill having convex V-shape cutting edges according to the present invention.

Fig. 14 shows a measurement result of the circularity of the drilled holes in a 1mm thick brass plate using axial asymmetric drills of the embodiment of the present invention and the comparative example.
Fig.15 shows a measurement result of the circularity of the drilled holes in a 1mm thick brass plate using axial asymmetric drills of the embodiment of the present invention and the comparative example.
Fig.16 shows a measurement result of the circularity of the drilled holes in a 1mm thick brass plate using axial asymmetric drills of the embodiment of the present invention and the comparative example.

## Claims

**1.** An axial asymmetric edge drill having a plurality of cutting edges revolving across the drill shaft center for drilling an object by wherein,
the chisel portion of the drill is formed at the center of the tip portion of the drill so that the center of the chisel portion matches with the drill shaft center,
at least one of the cutting edges is in an axial asymmetric position with another cutting edge across the drill shaft center, and
the outline of the edges of the drill forms a circular arc.

**2.** An axial asymmetric edge drill according to Claim 1 wherein,
the drill has two cutting edges, and
the angle between the extended line of the line connecting both ends of one cutting edge and the extended line of the line connecting both ends of another cutting edge is in the range from 5° to 175° at the end face where the cutting edges of the drill are positioned.

**3.** An axial asymmetric edge drill according to Claim 1 wherein,
the drill has three or more cutting edges, and
the angle θ between the extended line of the line connecting both ends of one cutting edge and the extended line of the line connecting both ends of at least one another cutting edge is in the range of Equation [1] or [2] at the end face where the cutting edges of the drill are positioned.

$$0^\circ < \theta \leqq \{(360/N) - 5\}^\circ \qquad [1]$$

$$\{(360/N) + 5\}^\circ \leqq \theta < 180^\circ \qquad [2]$$

N represents the number of the cutting edges in Equations [1] and [2].

**4.** An axial asymmetric edge drill according to either one of Claims 1 through 3 wherein,
the tip of the cutting edge is curved.

**5.** An axial asymmetric edge drill having a plurality of cutting edges revolving across the drill shaft center for drilling an object by wherein,
the chisel portion of the drill is formed at the center of the tip portion of the drill so that the center of the chisel portion matches with the drill shaft center, and
at least one of the cutting edges is convex V-shaped.

**6.** An axial asymmetric edge drill according to Claim 5 wherein,
the angle between the cutting edges forming the convex V-shape is 140° .

Fig. 1

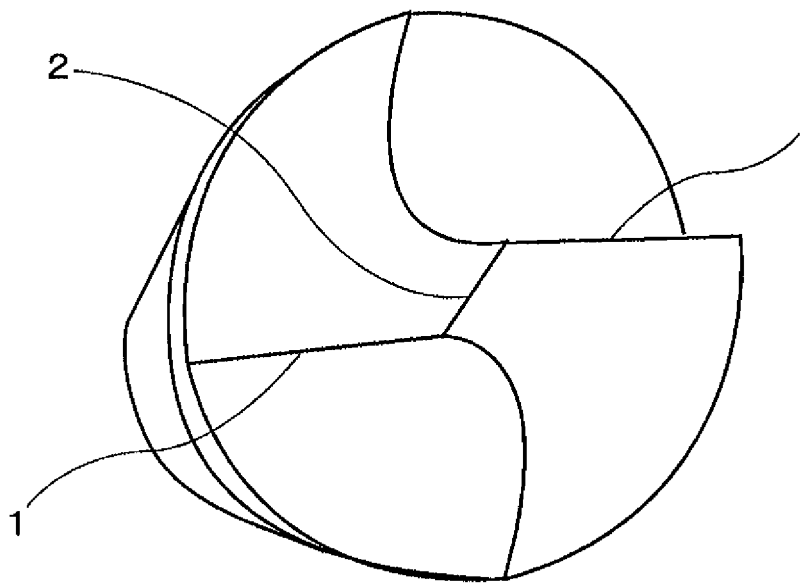


Fig. 2

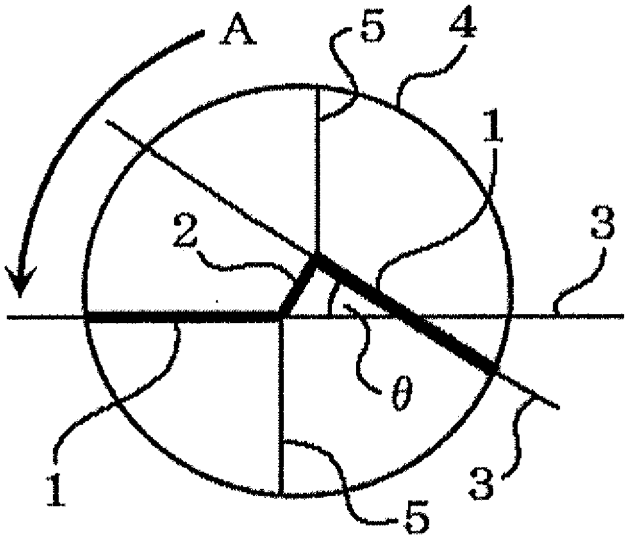

Fig. 3

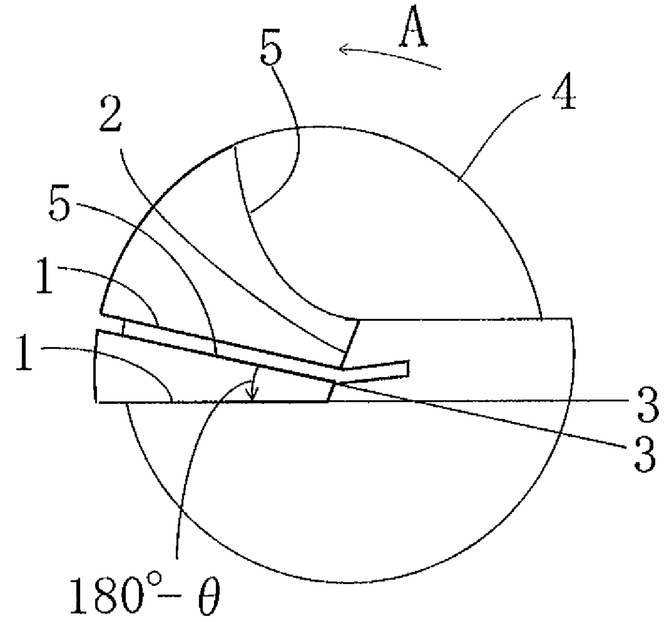


(A)

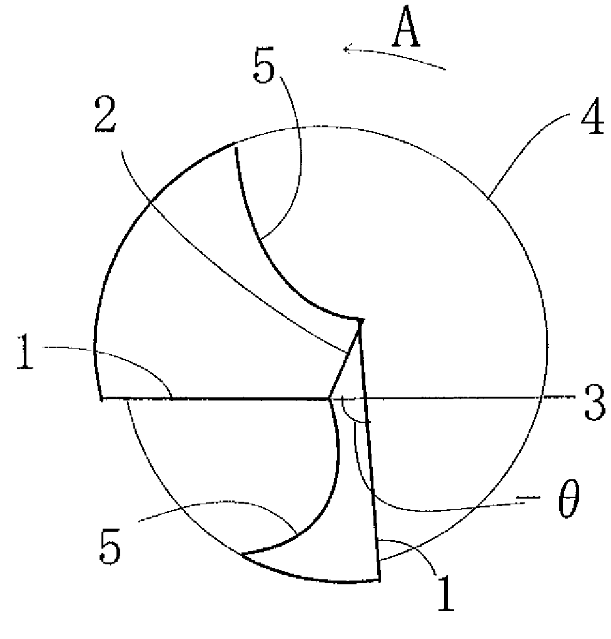


(B)

Fig. 4

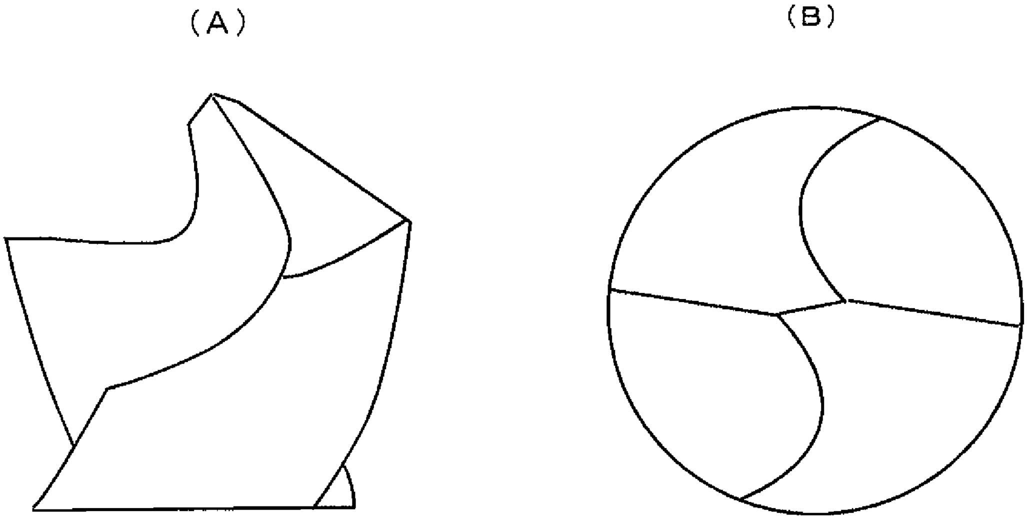


Fig. 5

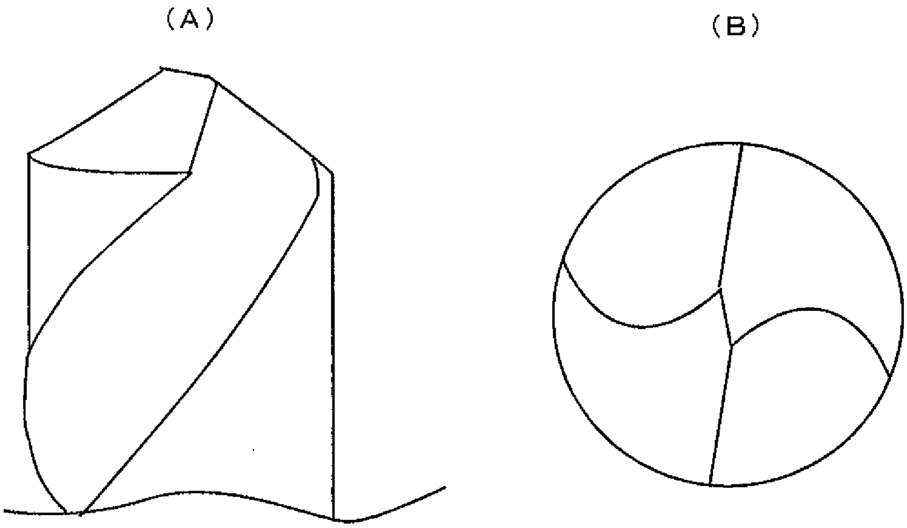

Fig. 6

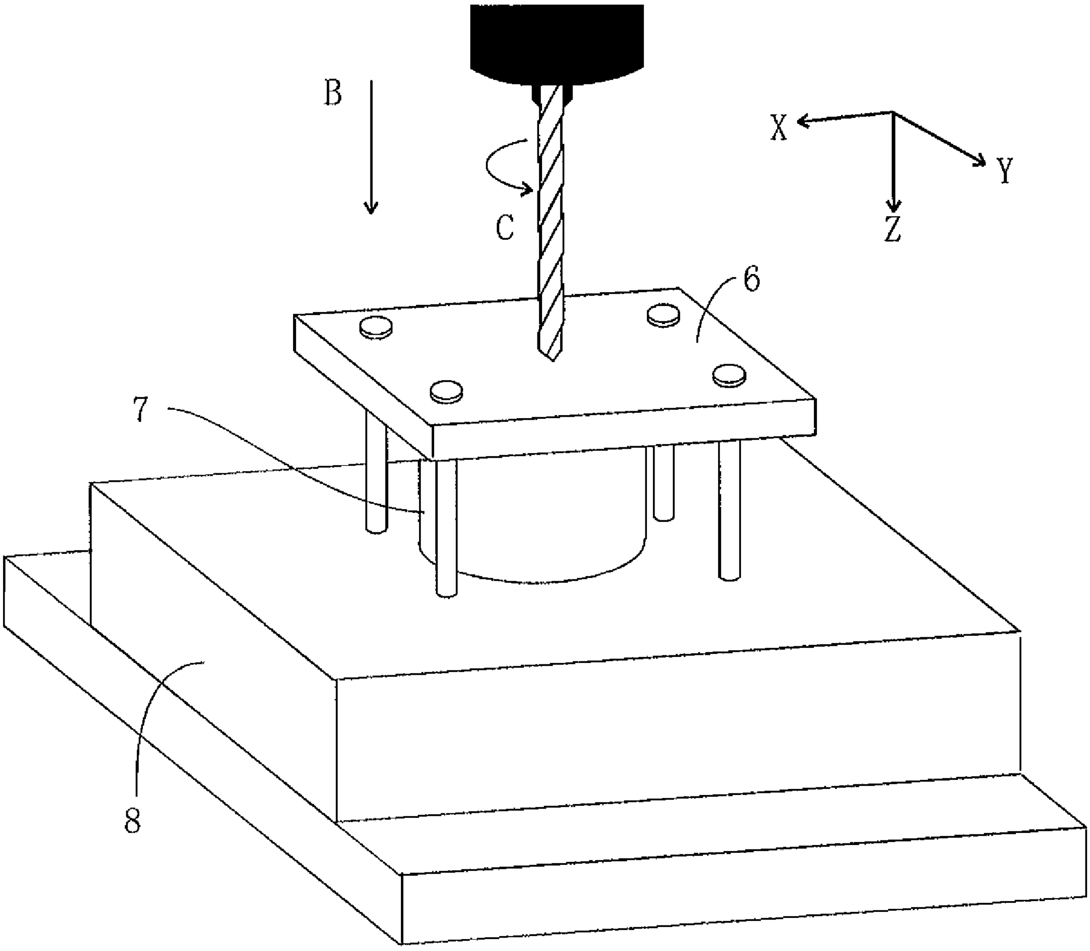

Fig. 7

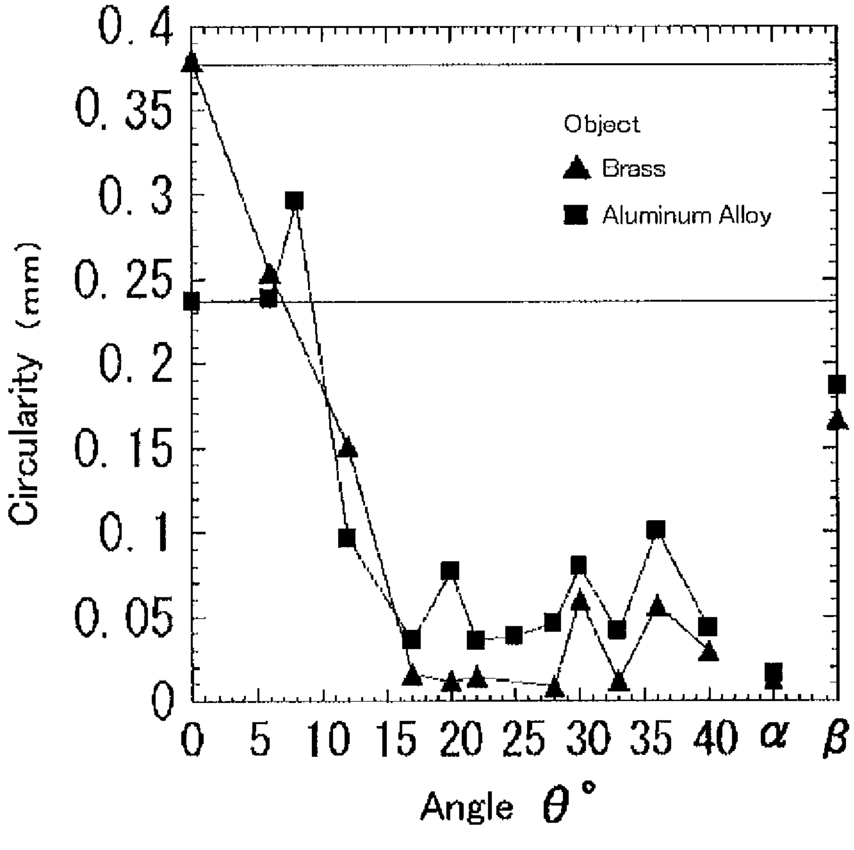
0. 4
0. 35
0. 3
0. 25
0. 2
0. 15
0. 1
0. 05
0
Circularity (mm)
Object
Brass
Aluminum Alloy
0
5
10
15
20
25
30
35
40
α
β
Angle θ °

Fig.8

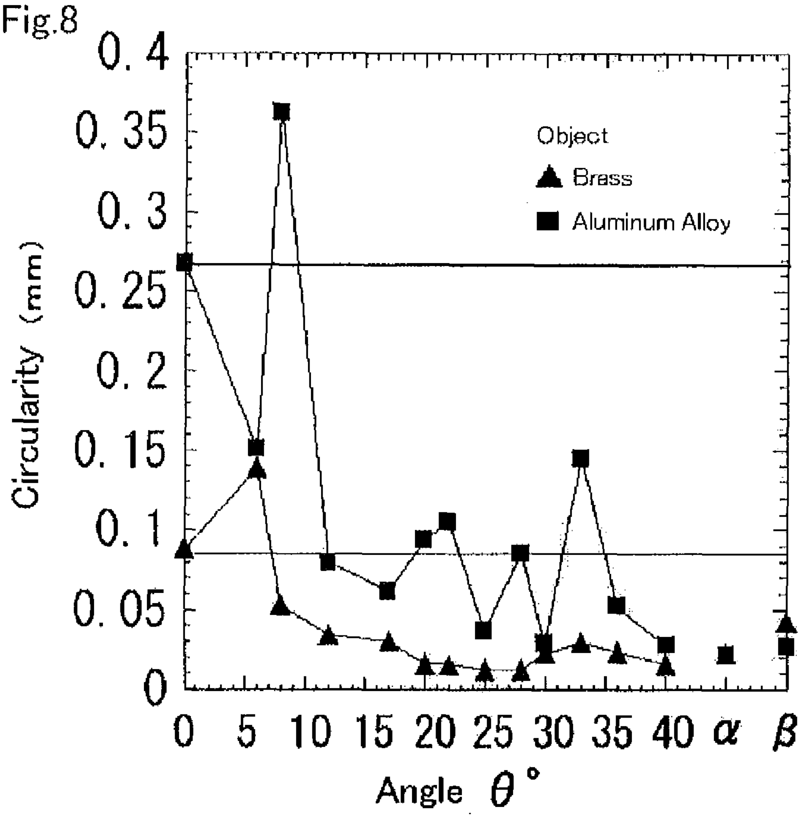
0.4
0.35
0.3
0.25
0.2
0.15
0.1
0.05
0
Circularity (mm)
Object
Brass
Aluminum Alloy
0 5 10 15 20 25 30 35 40 α β
Angle θ°

Fig.9

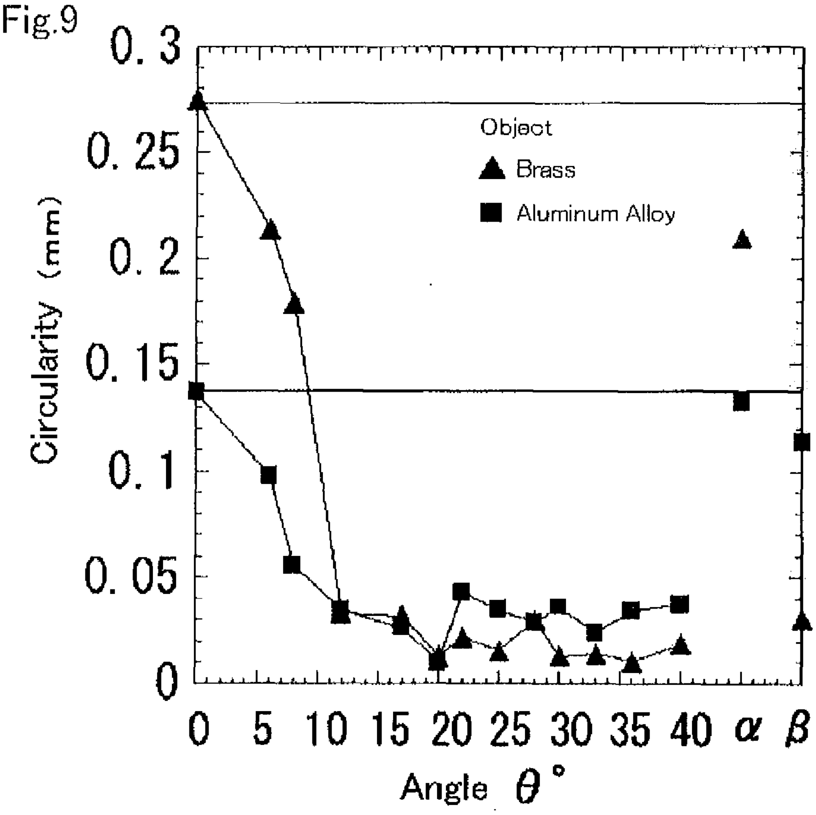
0.3
0.25
0.2
0.15
0.1
0.05
0
Circularity (mm)
Object
Brass
Aluminum Alloy
0 5 10 15 20 25 30 35 40 α β
Angle θ°

Fig. 10

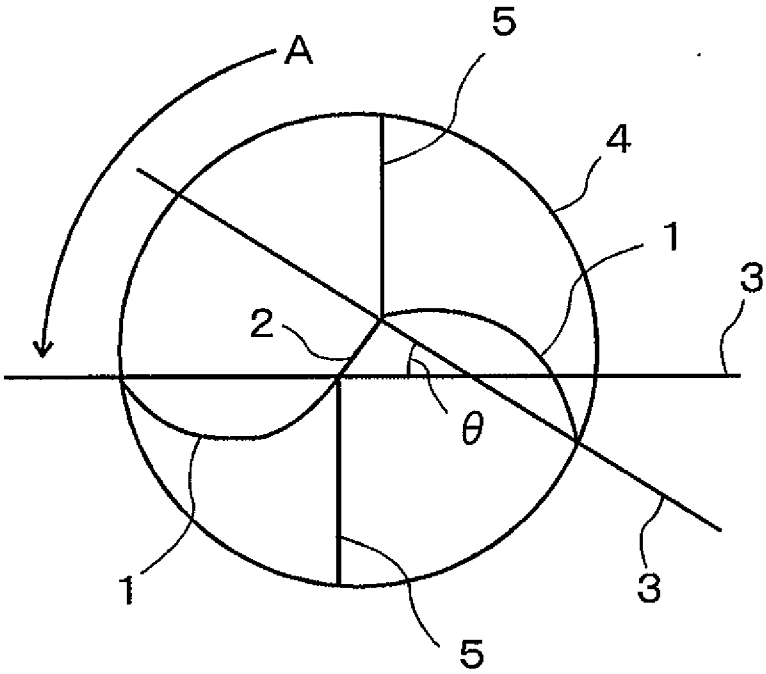

Fig. 11

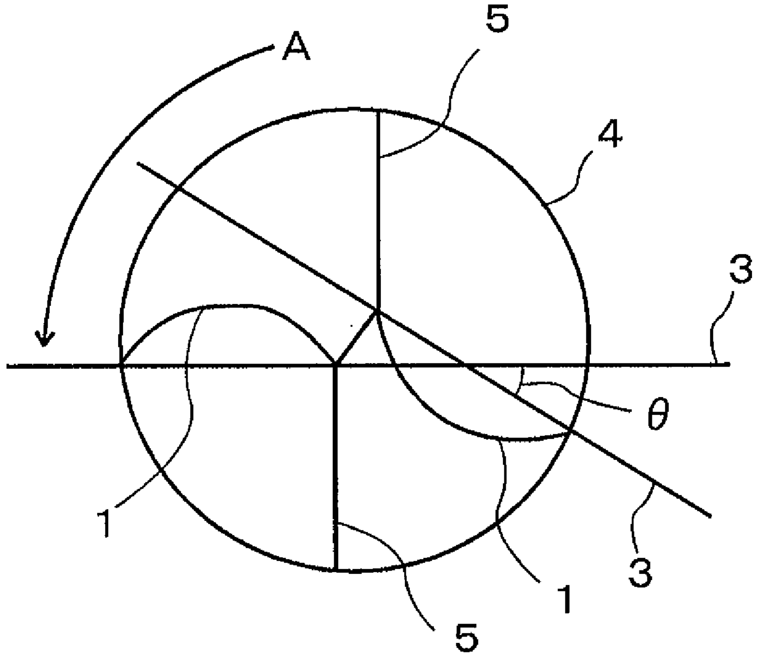


Fig. 12

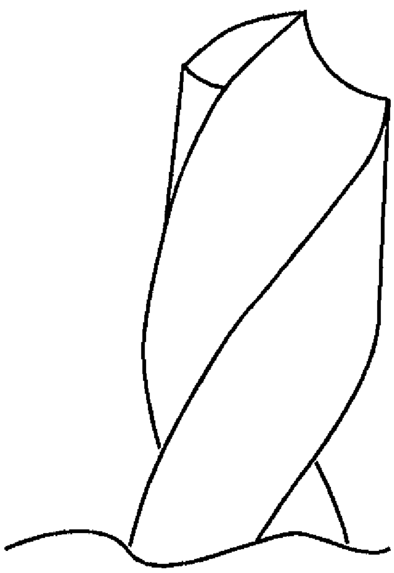

Fig. 13

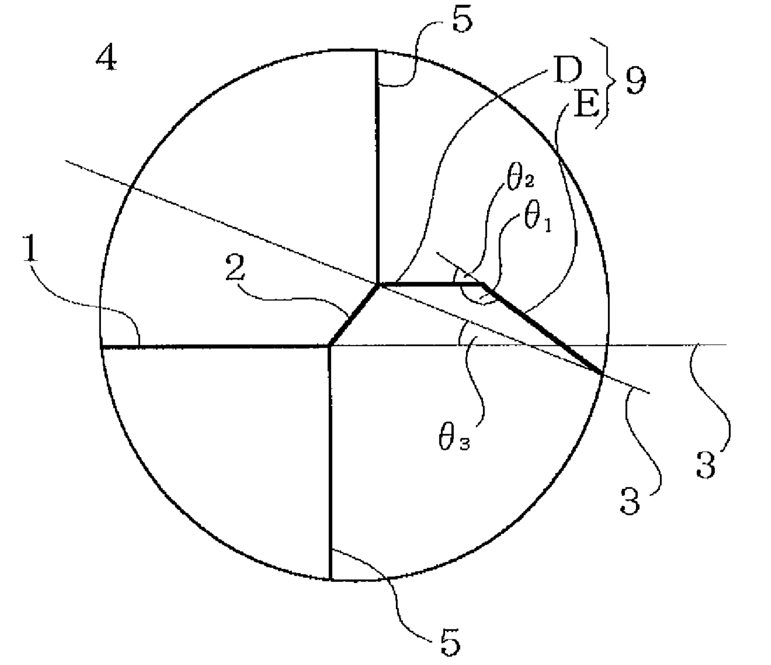
5
4
D
E
9
θ2
θ1
1
2
θ3
3
3
5

Fig.14

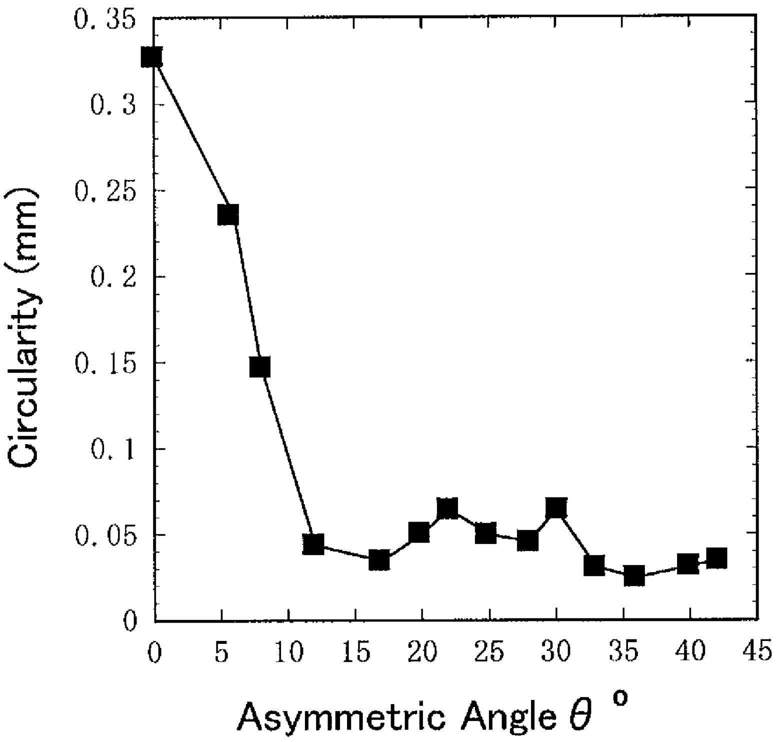
0. 35
0. 3
0. 25
0. 2
0. 15
0. 1
0. 05
0
Circularity (mm)
0
5
10
15
20
25
30
35
40
45
Asymmetric Angle θ °

Fig.15

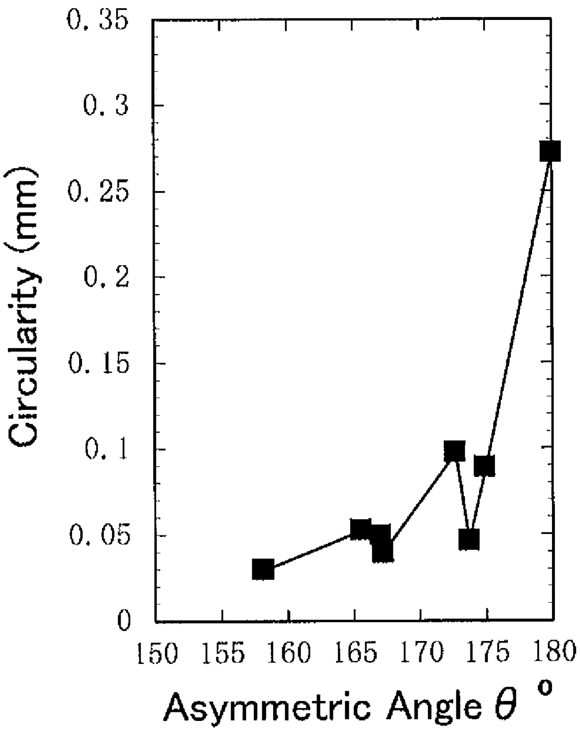
0.35
0.3
0.25
0.2
0.15
0.1
0.05
0
Circularity (mm)
150 155 160 165 170 175 180
Asymmetric Angle θ °

Fig.16

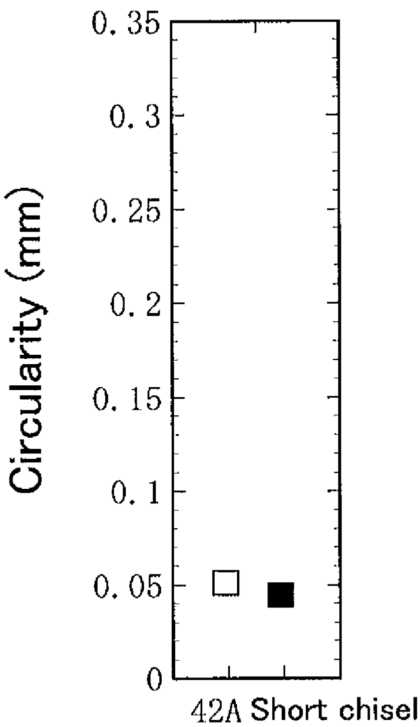
0.35
0.3
0.25
0.2
0.15
0.1
0.05
0
Circularity (mm)
42A Short chisel

## INTERNATIONAL SEARCH REPORT

International application No.
PCT/JP2007/053992

A. CLASSIFICATION OF SUBJECT MATTER
*B23B51/00*(2006.01)i

According to International Patent Classification (IPC) or to both national classification and IPC

B. FIELDS SEARCHED

Minimum documentation searched (classification system followed by classification symbols)
B23B51/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 63-120008 A (Mitsubishi Metal Corp.), 24 May, 1988 (24.05.88), Page 2, lower right column, lines 12 to 14; page 3, lower left column, line 16 to lower right column, line 3 (Family: none) | 1-3<br>4 |
| Y | Microfilm of the specification and drawings annexed to the request of Japanese Utility Model Application No. 139247/1978(Laid-open No. 55312/1980) (Mitsubishi Metal Corp.), 15 April, 1980 (15.04.80), Fig. 3 (Family: none) | 4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 June, 2007 (04.06.07) | 12 June, 2007 (12.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/053992

C (Continuation). DOCUMENTS CONSIDERED TO BE RELEVANT

| Category* | Citation of document, with indication, where appropriate, of the relevant passages | Relevant to claim No. |
|---|---|---|
| X | Microfilm of the specification and drawings annexed to the request of Japanese Utility Model Application No. 92253/1990(Laid-open No. 51318/1992) (Toshiba Tungaloy Co., Ltd.), 30 April, 1992 (30.04.92), Fig. 3 (Family: none) | 5-6 |

Form PCT/ISA/210 (continuation of second sheet) (April 2005)

**INTERNATIONAL SEARCH REPORT**

International application No.
PCT/JP2007/053992

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The special technical feature of the inventions in claims 1-4 is cutting blades disposed axially non-symmetrically, and the special technical feature of the inventions in claims 5-6 is cutting blades having a convex V shape.

Therefore, the inventions in claim 1-4 and the inventions in claims 5-6 has no common special technical feature, and do not fulfill the unity of invention.

1. ☐ As all required additional search fees were timely paid by the applicant, this international search report covers all searchable claims.
2. ☒ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP TOKUKAIHEI5301109 B
- JP TOKUKAIHEI8155715 B
- JP TOKUKAI2002361509 B
- JP 2005246577 A
- JP TOKUKAI2005246577 B
- JP 11510103 A
- US 4913603 A


### Non-patent literature cited in the description


- **SHOSUKE TSUEDA ; YOSHIO HASEGAWA ; HIROSHI KIMURA.** Drill Walking Phenomenon. Japan Society of Mechanical Engineers Collected Papers, 1984, 50-453